# EUROPEAN PATENT SPECIFICATION

(11) **EP 0 424 944 B1**
(45) Date of publication and mention of the grant of the patent: **17.01.1996**
(21) Application number: 90120500.5
(22) Date of filing: 25.10.1990
(51) Int. Cl.: G02F 1/137, G02F 1/1337

(54) **Ferroelectric liquid crystal device**
Ferroelektrische Flüssigkristallvorrichtung
Dispositif à cristal liquide ferroélectrique

(30) Priority: 26.10.1989 JP 277028/89
(43) Date of publication of application: 02.05.1991
(73) Proprietor: CANON KABUSHIKI KAISHA, Tokyo (JP)
(72) Inventor: Kodera, Yasuto, Ohta-ku, Tokyo (JP)
(74) Representative: Pellmann, Hans-Bernd, Dipl.-Ing.

(56) References cited:
- EP-A- 286 539
- WO-A-87/06020
- US-A- 4 591 886
- US-A- 4 778 259

## Description

### FIELD OF THE INVENTION AND RELATED ART

The present invention relates to a liquid crystal device using a ferroelectric liquid crystal which can be incorporated in an image display apparatus, a recording apparatus, etc.

Clark and Lagerwall have proposed a liquid crystal device showing bistability (U.S. Patent No. 4,367,924, etc.). As the liquid crystal showing bistability, a ferroelectric liquid crystal assuming chiral smectic C phase (SmC*) or H phase (SmH*) is used. The ferroelectric liquid crystal assumes bistable states including a first optically stable state and a second optically stable state depending on the electric field thereto. Accordingly, as different from a TN-type liquid crystal used in a conventional optical modulation device, the liquid crystal is oriented to a first optically stable state in response to one electric field vector, and is oriented to a second optically stable state in response to the other electric field vector, for example. Further, this type of liquid crystal has properties of quickly responding to an applied electric field to assume either one of the above-mentioned two stable states and retaining the resultant state in the absence of an electric field. When a liquid crystal device is constituted by using a ferroelectric liquid crystal showing such properties, it is possible to obtain substantial improvements to many problems inclusive of poor viewing angle characteristic involved in a conventional TN-type device.

In a ferroelectric liquid crystal device showing bistability realized heretofore, however, a satisfactorily uniform alignment state of liquid crystal has not been always formed. Further, in a liquid crystal device having a small pre-tile angle (less than 5 degrees), the tilt angle of the liquid crystal in chiral smectic phase is smaller than 22.5 degrees which provides a maximum transmittance but is an angle of the order of 8 degrees at most, thus failing to provide a sufficiently large contrast. On the other hand, in an liquid crystal device having a large pre-tilt angle (≧ 5 degrees), there occur 4 alignment states including two states (uniform alignment states) providing a high contrast and other two states (splay alignment states) providing a low contrast, so that a large contrast cannot be obtained as desired in some cases. Further, in case of the pre-tilt angle being 35 degrees or larger, the difference in directions regulated by the alignment films on a pair of substrates is too large so that the alignment axes of the liquid crystal are liable to be separated into one in a region regulated by one substrate and another in a region regulated by the other substrate, thus failing to provide an increased contrast.

Further, during a drive under application of constant voltages, it is possible to fail in providing a bright-dark display over the entirety or a part of the display region. According to my study, it has been found that the above failure of a bright-dark display is caused by a local difference in threshold voltage due to irregularity in cell thickness and/or a change in threshold voltage due to temperature change over the entirety or a part of the display area. The bright-dark display can be stabilized over the entire display area by changing the applied voltage waveform but another problem can be caused thereby due to narrowing of the drive margin to result in a lower contrast.

Document WO-A-87/06020 constituting the closest prior art discloses a ferroelectric liquid crystal device comprising a pair of parallel substrates and a ferroelectric liquid crystal disposed between the substrates. Each substrate has thereon a group of electrodes for driving the ferroelectric liquid crystal and is provided with an uniaxial alignment axis for aligning the ferroelectric liquid crystal molecules close to the surface along a predetermined direction. In particular, the liquid crystal molecules are aligned to form a pre-tilt angle of 0 to 45° with the liquid crystal-aligning surfaces of the substrates.

In order to provide a high contrast and an acceptable visual appearance for a display, according to document WO-A- 87/06020, a special wall surface treatment is used, i.e. a stream of silicon monoxide is deposited onto the wall.

Furthermore, document US-A-4 778 259 discloses a ferroelectric liquid crystal device which uses a rubbed or evaporated film on the substrate in order to receive an intersection angle (Θ) of 5 - 85°, and preferably an intersection angle (Θ) of 20 - 70°.

In addition, document EP-A-0 286 539 discloses a liquid crystal alignment showing a pre-tilt to only one liquid crystal aligning surface and no pre-tilt to the other substrate. In detail, one substrate is treated in order to align the molecules close to its surface along a determined direction and with a determined pre-tilt angle whereas the opposite substrate is treated for aligning the molecules parallel to the surface of the substrate along two directions.

It is, therefore, an object of the present invention to provide a liquid crystal device which shows a high contrast and an acceptable visual appearance for a display, while its production costs are low.

According to the present invention this object is achieved by a ferroelectric liquid crystal device comprising a pair of substrates and a ferroelectric liquid crystal disposed between said substrates, each substrate having thereon a group of electrodes for driving said ferroelectric liquid crystal and being provided with an uniaxial alignment axis for aligning the ferroelectric liquid crystal molecules, wherein said liquid crystal molecules are aligned to provide a director forming a pre-tilt angle (α) of 5 - 35° with the liquid crystal-aligning surfaces of said substrates, said ferroelectric liquid crystal device being characterized in that each said substrate has thereon a rubbed organic alignment film provided with said uniaxial alignment axis, and said alignment axes are set to intersect each other at a prescribed intersection angle (Θ) of 2 - 15°.

The present invention will be described hereinbelow by way of example and with reference to the accompanying drawings.

### BRIEF DESCRIPTION OF THE DRAWINGS

Figure 1 is a block diagram showing a drive system for a liquid crystal device used in the present invention.

Figure 2 is a schematic plan view of embodiments of the ferroelectric liquid crystal device according to the present invention.

Figures 3A - 3C are sectional views respectively taken along the line A-A in Figure 2 showing different sectional structures of the embodiments.

Figures 4A and 4B are schematic plan views each illustrating a manner of intersection of the uniaxial alignment axes provided to a pair of substrates in a liquid crystal device shown in Figure 2.

Figure 5 is a schematic view illustrating a pre-tilt angle formed by a liquid crystal molecule against a liquid crystal aligning surface.

Figure 6 is a schematic view illustrating molecular orientation axes (directors) at various points between the substrates in 4 alignment states.

Figure 7 is a graph showing the pre-tilt angle-dependence and the intersection angle-dependence of the contrast ratio.

Figure 8 is a graph showing the intersection angle-dependence and the pre-tilt angle-dependence of the drive margin.

Figure 9 is a time chart of a set of drive voltage waveforms for measuring the drive margin.

Figure 10 is a diagram for illustrating a drive margin.

Figure 11 and 12 are views showing an embodiment of the liquid crystal device according to the invention applied to an image forming apparatus.

### DESCRIPTION OF THE PREFERRED EMBODIMENTS

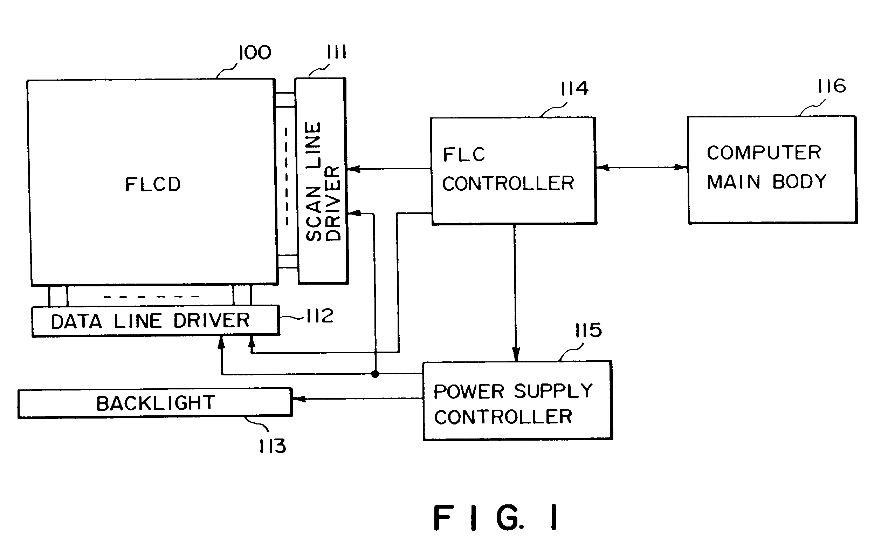

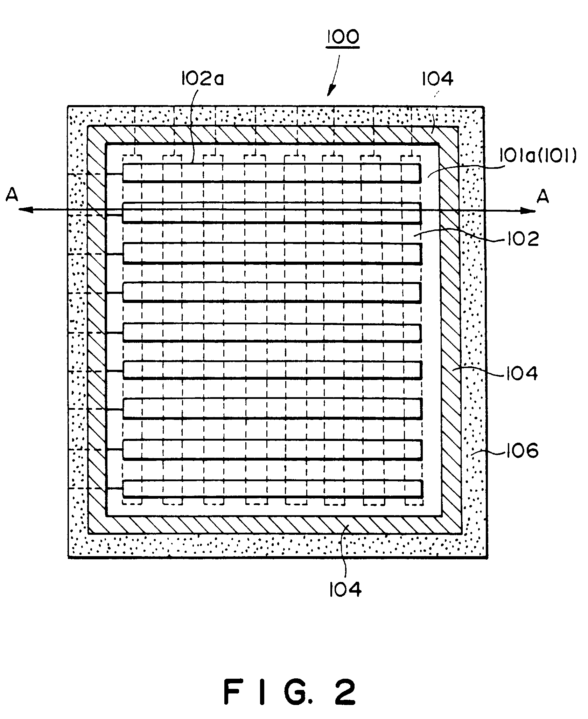

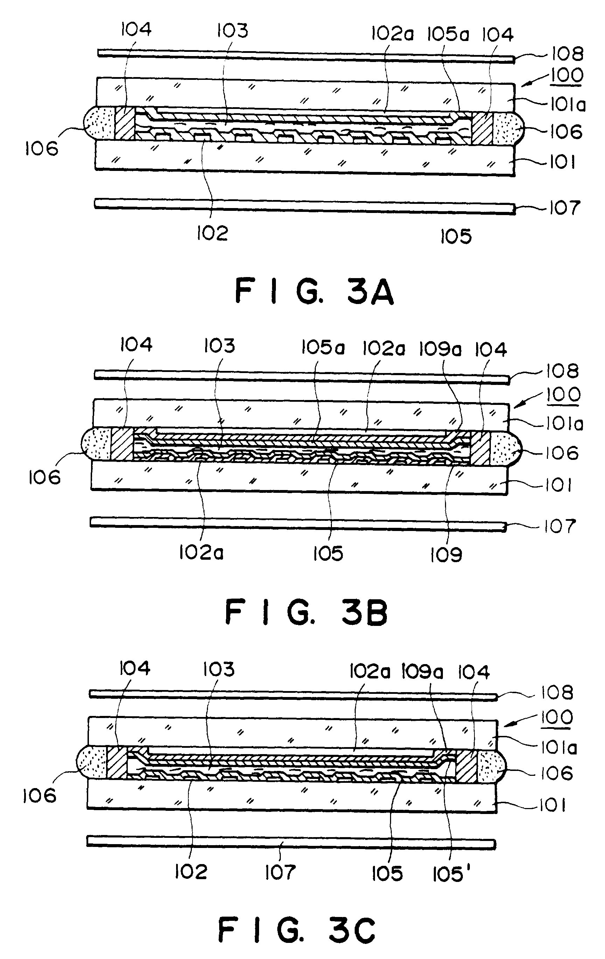

Figure 1 is a block diagram showing a drive system for a liquid crystal device used in the present invention. Figure 2 is a plan view common to several embodiments of the ferroelectric liquid crystal device of the present invention, and Figures 3A - 3C are sectional views of the embodiments having different laminar structures respectively taken along the line A-A in Figure 2.

First of all, a liquid crystal display apparatus according to the present invention is explained.

Referring to Figure 1 showing a block diagram of a liquid crystal display apparatus according to the present invention, the apparatus includes a ferroelectric liquid crystal device 100 according to the invention, a scan or scanning line driver 111 as a means for applying a scanning signal to the scanning lines (electrodes) based on image signals, a data line driver 112 as a means for applying data signals to data lines (electrodes) based on the image signals to drive the ferroelectric liquid crystal device 100 in combination with the scanning line driver 111, a backlight 113 as an illumination light source, an FLC controller 114 for controlling the drive of the ferroelectric liquid crystal device 100, a power supply controller 115 as a means for supplying power to the ferroelectric liquid crystal device 100 and the backlight 113 and a computer main body 116 for controlling the entire operation of the liquid crystal display apparatus.

A cell structure 100 shown in Figures 2 and 3 comprises a pair of substrates 101 and 101a made of glass plates or plastic plates which are held with a predetermined gap with spacers 104 and sealed with an adhesive 106 to form a cell structure filled with a liquid crystal. On the substrate 101 is further formed an electrode group (e.g., an electrode group for applying scanning voltages of a matrix electrode structure) comprising a plurality of transparent electrodes 102 in a predetermined pattern, e.g., of a stripe pattern. On the substrate 101a is formed another electrode group (e.g., an electrode group for applying data voltages of the matrix electrode structure) comprising a plurality of transparent electrodes 102a intersecting with the transparent electrodes 102.

In the present invention, an insulating film for preventing short circuit can be formed to cover at least one side of the above-mentioned transparent electrodes 102 and 102a. In the device shown in Figure 3A, however, such insulating films are not used so that alignment control films 105 and 105a are directly disposed over the transparent electrodes 102 and 102a formed on the substrates 101 and 101a, respectively. In the device shown in Figure 3B, on the substrates 101 and 101a, insulating films for short circuit prevention 109 and 109a and alignment control films 105 and 105a are disposed, respectively. In the device shown in Figure 3C, an insulating film for short circuit prevention 109a and an alignment control film 105a are formed on the substrate 101a, and an alignment control film 105 is directly disposed on the substrate 101.

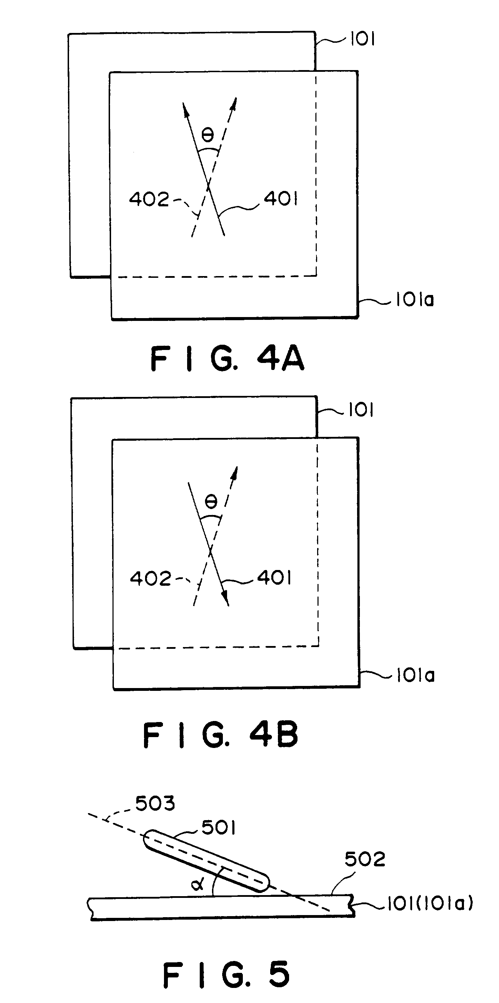

In this instance, as shown in Figures 4A and 4B, the above-mentioned uniaxial alignment axes 401 and 402 are provided to the pair of substrates 101 and 101a so as to intersect each other at an intersection angle θ. The intersection angle θ can change depending on the ferroelectric liquid crystal material and the kind of the alignment control film but may preferably be selected in the range of 2 - 25 degrees. On the other hand, the pre-tilt angle α formed between the liquid crystal aligning surface 502 and the liquid crystal molecule 503 is selected in the range from 5 to 35 degrees.

Further, the insulating films for short circuit prevention 109 and 109a may be formed in a thickness of 20 nm (200 Å) or larger, preferably 50nm (500 Å) or larger, with an inorganic insulating material, such as SiO₂, TiO₂, Al₂O₃, Si₃N₄ and BaTiO₃. The film formation may for example be effected by sputtering, ion beam evaporation, or calcination of an organic titanium compound, an organic silane compound, or an organic aluminum compound. The organic titanium compound may for example be an alkyl (methyl, ethyl, propyl, butyl, etc.) titanate compound, and the organic silane compound may be an ordinary silane coupling agent. In case where the thickness of the insulating films for short circuit prevention 109 and 109a is below 20 nm (200 Å), a sufficient short circuit prevention effect cannot be accomplished. On the other hand, if the thickness is above 500 nm (5000 Å), the effective voltage applied to the liquid crystal layer is decreased substantially, so that the thickness may be set to 500 nm (5000 Å) or less, preferably 200 nm (2000 Å) or less.

The liquid crystal material suitably used in the present invention is a chiral smectic liquid crystal showing ferroelectricity. More specifically, liquid crystals in chiral smectic C phase (SmC*), chiral smectic G phase (SmG*), chiral smectic F phase (SmF*), chiral smectic I phase (SmI*) or chiral smectic H phase (SmH*) may be used.

Details of ferroelectric liquid crystals may be disclosed in, e.g., LE JOURNAL DE PHYSIQUE LETTERS 36 (L-69) 1975, "Ferroelectric Liquid Crystals"; Applied Physics Letters 36 11, 1980, "Submicro Second Bi-stable Electrooptic Switching in Liquid Crystals"; Kotai Butsuri (Solid-State Physics) 16 (141) 1981, "Ekisho (Liquid Crystals)"; U.S. Patents Nos. 4,561,726; 4,589,996; 4,592,858; 4,596,667; 4,613,209; 4,614,609; 4,622,165, etc. Chiral smectic liquid crystals disclosed in these references can be used in the present invention.

Other specific examples of ferroelectric liquid crystal may include decyloxybenzylidene-p'- amino-2-methylbutylcinnamate (DOBAMBC), hexyloxybenzylidene-p'-amino-2-chloropropylcinnamate (HOBACPC), and 4-O-(2-methyl)butylresorcylidene-4'- octylaniline (MBRA 8).

Hereinbelow, some examples of actual production are shown.

### Examples 1 - 5

Two 1.1 mm-thick glass substrates as a pair of substrates were respectively provided with ITO stripe electrodes and then coated with a 50 nm (500 Å)-thick insulating film of SiO₂ by sputtering for preventing short circuit between the electrodes on the substrates. Then, each substrate thus treated was coated with a 1.0 % solution of a polyimide-forming liquid ("LQ 1802" made by Hitachi Kasei K.K.) by a spinner rotating at 3000 rpm for 30 seconds and then heated for curing at 300 °C for about 1 hour to form a 15 nm (150 Å)-thick polyimide alignment film. Then, the respective polyimide alignment films were subjected to rubbing so as to be provided with rubbing axes (uniaxial alignment axes) in a relationship as will be further explained hereinafter. Then, on one of the substrates thus treated, alumina beads having an average particle size of about 1.5 µm (microns) were dispersed, and the other substrate was superposed thereon so that their stripe electrodes intersected each other and their uniaxial alignment axes intersected each other at a prescribed angle θ as shown in Figure 4A. Then, the two substrates were fixed to each other to form a blank cell.

The cell was then filled with a ferroelectric liquid crystal ("CS1014" (trade name), made by Chisso K.K.) under vacuum and, after sealing, the liquid crystal was gradually cooled to chiral smectic phase to be aligned. The pre-tilt angle α between the director of liquid crystal molecules and the liquid crystal aligning surfaces of the thus obtained liquid crystal cell was found to be 12 degrees as measured by the crystal rotation method (Jpn. J. Appl. Phys. Vol. 19 (1980), No. 10).

In the above described manner, 5 liquid crystal cells having intersection angles θ of 2 degrees, 5 degrees, 10 degrees, 15 degrees and 25 degrees, respectively, within the range specified by the present invention were prepared and subjected to observation of the alignment states, bistability on application of a single pulse of a sufficient voltage and measurement of contrast ratios under cross nicols, whereby the results shown in Table 1 appearing hereinafter were obtained.

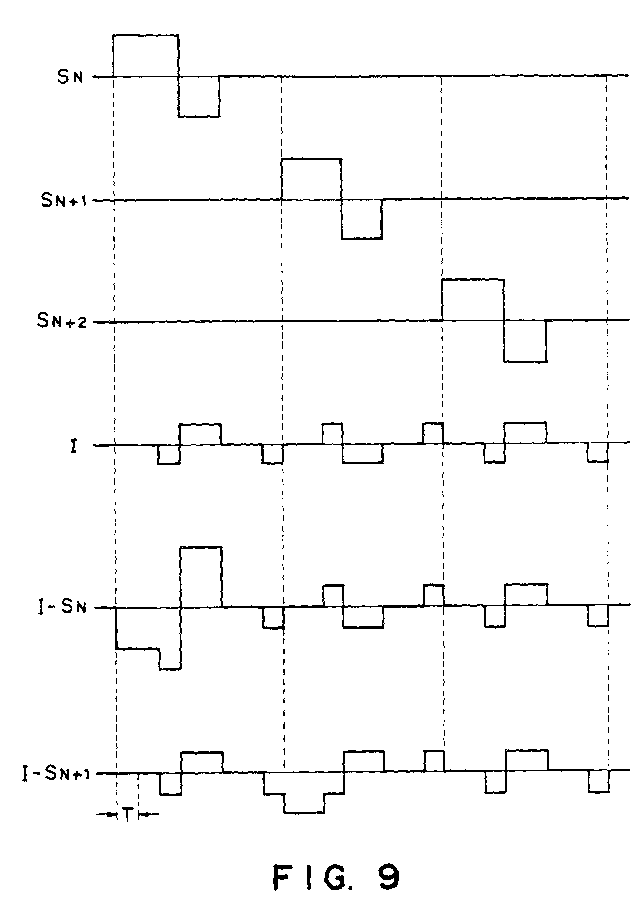

Further, the above-prepared matrix display cell was subjected to measurement of a drive margin under cross nicols by applying a set of driving waveforms shown in Figure 9. The result is also shown in Table 1. Referring to Figure 9, at S_{N}, S_{N+1}, S_{N+2} ... are shown voltage waveforms applied to the respective scanning electrodes S_{N}, S_{N+1}...; at I is shown a voltage waveform applied to a data electrode I; and at I-S_{N}, etc. are shown voltage waveforms applied to pixel formed at the respective intersections of the scanning electrodes S_{N} ... and the data electrode I.

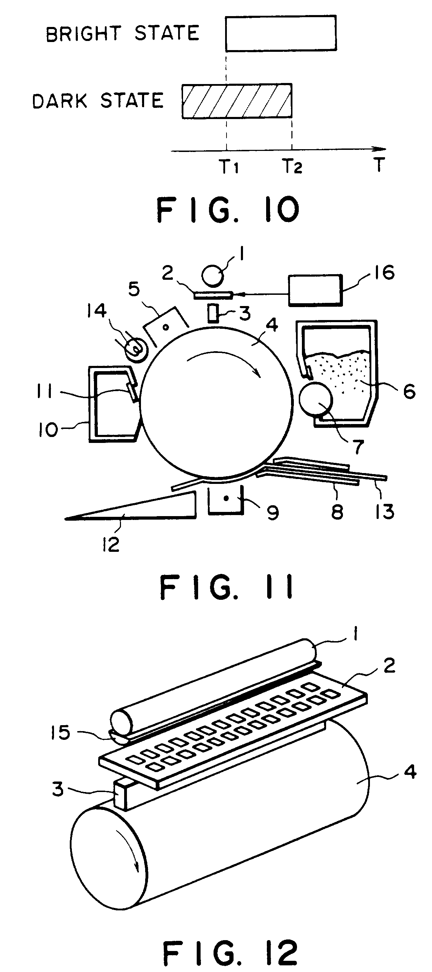

Herein, the drive margin was measured as follows. The set of driving waveforms shown in Figure 9 are applied to a matrix cell while changing the unit pulse width T. When a bright state and a dark state are written under cross nicols within the respective ranges for T as shown in Figure 10, with T₁ as the lower limit width for giving a bright state in a normal alignment state and T₂ as the upper limit width for giving a dark state in a normal alignment state, the drive margin is defined by (T₂-T₁ )/(T₁+T₂) which increases with an increase in overlap of the ranges for writing both the bright and dark states and provides a measure of device performance.

### Comparative Example 1

A liquid crystal cell was prepared in the same manner as in Examples 1 - 5 except that the intersection angle θ between the rubbing axes was set to 0 degree. The pre-tilt α angle was measured to be 12 degrees. As a result of observation of the alignment state in the cell, two states including a splay alignment state giving a low contrast and a uniform alignment state giving a high contrast were found. The contrast was measured to be 10. The results are also shown in Table 1.

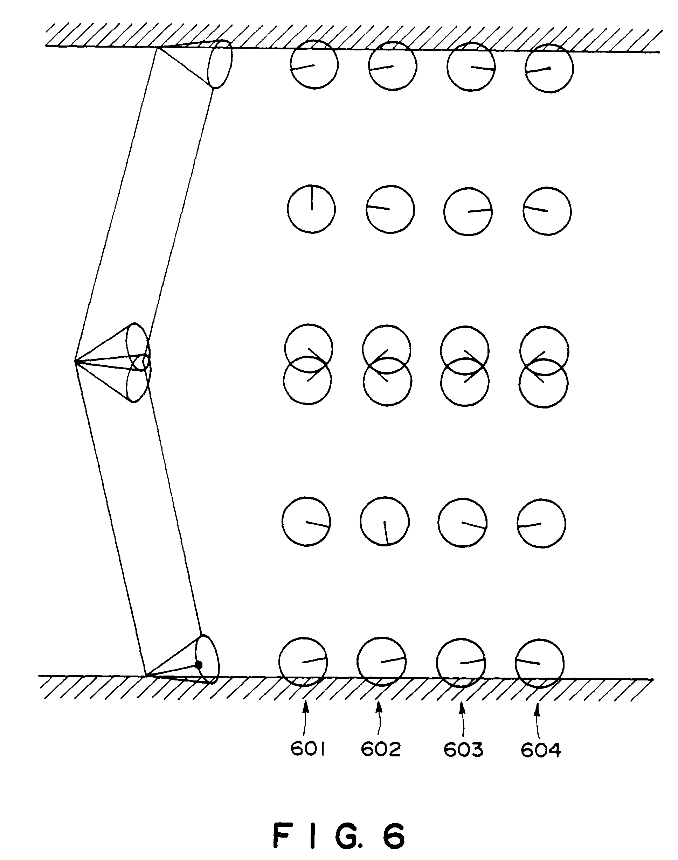

Figure 6 is a schematic view illustrating positions of directors at various points between the substrates in splay and uniform alignment states. Referring to Figure 6, at 601 - 604 are respectively shown a change in director positions across the thickness, wherein a director position along a chiral smectic cone is represented by a bar projected onto the bottom (represented as a circle) of the cone as a view seen from the bottom. At 601 and 602 are shown two orientation states in the splay alignment, and at 603 and 604 are shown two orientation states in the uniform alignment.

In the cell of this comparative example, the splay alignment and the uniform alignment occurred in mixture so that the cell was supposed to fail in providing a high contrast in spite of a large pre-tilt angle α of 12 degrees.

Further, when the cell was subjected to the measurement of the drive margin, the splay alignment state and the uniform alignment state were copresent at any value of T allowing switching, thus failing to allow the switching between bright and dark states in the uniform alignment state extending over the entire picture area.

### Comparative Examples 2 - 5

Four types of liquid crystal cells respectively provided with intersection angles θ of 0 degree, 2 degrees, 10 degrees and 25 degrees were prepared in the same manner as in Examples 1 - 5 except that a polyimide-forming solution "LP 64" (made by Toray K.K.) was used instead of the polyimide-forming solution "LQ 1802" used in Examples 1 - 5. The liquid crystal cells showed a pre-tilt angle of 2.5 degrees as measured by the same method as in Examples 1 - 5. The contrast ratios of the cells measured respectively are shown in Table 2 appearing hereinafter.

As shown in Table 2, the liquid crystal cells having a small pre-tile angle of 2.5 degrees did not provide a substantial increase in contrast ratio even at a certain intersection angle between the uniaxial alignment axes.

### Comparative Examples 6 - 9

Four types of liquid crystal cells respectively provided with intersection angles θ of 0 degree, 2 degrees, 10 degrees and 25 degrees were prepared in the same manner as in Examples 1 - 5 except that a polyimide-forming solution "SE 100" (made by Nissan Kagaku K.K.) was used instead of the polyimide-forming solution "LQ 1802" used in Examples 1 - 5. The liquid crystal cells showed a pre-tilt angle of 4.0 degrees as measured by the same method as in Examples 1 - 5.

The contrast ratios and the drive margins of the cells were measured, whereby no uniform alignment providing a high contrast was formed but only a splay alignment state providing a low contrast was formed whereas the drive margins could be measured. The results are shown in Table 3.

### Examples 6 - 9 and Comparative Example 10

Five types of liquid crystal cells respectively provided with intersection angles θ of 0 degree, 2 degrees, 10 degrees, 15 degrees and 25 degrees were prepared in the same manner as in Examples 1 - 5 except that a polyimide-forming solution "RN-626" (made by Nissan Kagaku K.K.) was used instead of the polyimide-forming solution "LQ 1802" used in Examples 1 - 5. The liquid crystal cells showed a pre-tilt angle of 5.0 degrees as measured by the same method as in Examples 1 - 5. The contrast ratios of the cells measured respectively are shown in Table 4 appearing hereinafter.

In the cell of Comparative Example 10 with an intersection angle θ of 0 degree, the above-mentioned splay alignment and uniform alignment occurred in mixture, so that a substantial improvement in contrast was not attained. On the other hand, in the cells of Examples 6 - 9, a uniform alignment was formed to provide a substantially improved contrast.

### Examples 10 - 14

Five types of liquid crystal cells respectively provided with intersection angles θ of 2 degrees, 5 degrees, 10 degrees, 15 degrees and 25 degrees were prepared in the same manner as in Examples 1 - 5 except that the uniaxial alignment axes provided to each pair of substrates were reverse to each other as shown in Figure 4B. The liquid crystal cells showed a pre-tilt angle of 8.5 degrees. The contrast ratios of the cells measured respectively under cross nicols are shown in Table 5 appearing hereinafter.

### Examples 15 - 19

Four types of liquid crystal cells respectively provided with intersection angles θ of 2 degree, 5 degrees, 10 degrees, 20 degrees and 25 degrees were prepared in the same manner as in Examples 1 - 5 except that a ferroelectric liquid crystal "CS 1011" (trade name, made by Chisso K.K.) was used instead of the ferroelectric liquid crystal "CS 1014" (trade name, made by Chisso K.K.) used in Examples 1 - 5. The liquid crystal cells showed a pre-tilt angle of 10.5 degrees. The contrast ratios of the cells measured respectively are shown in Table 6 appearing hereinafter.

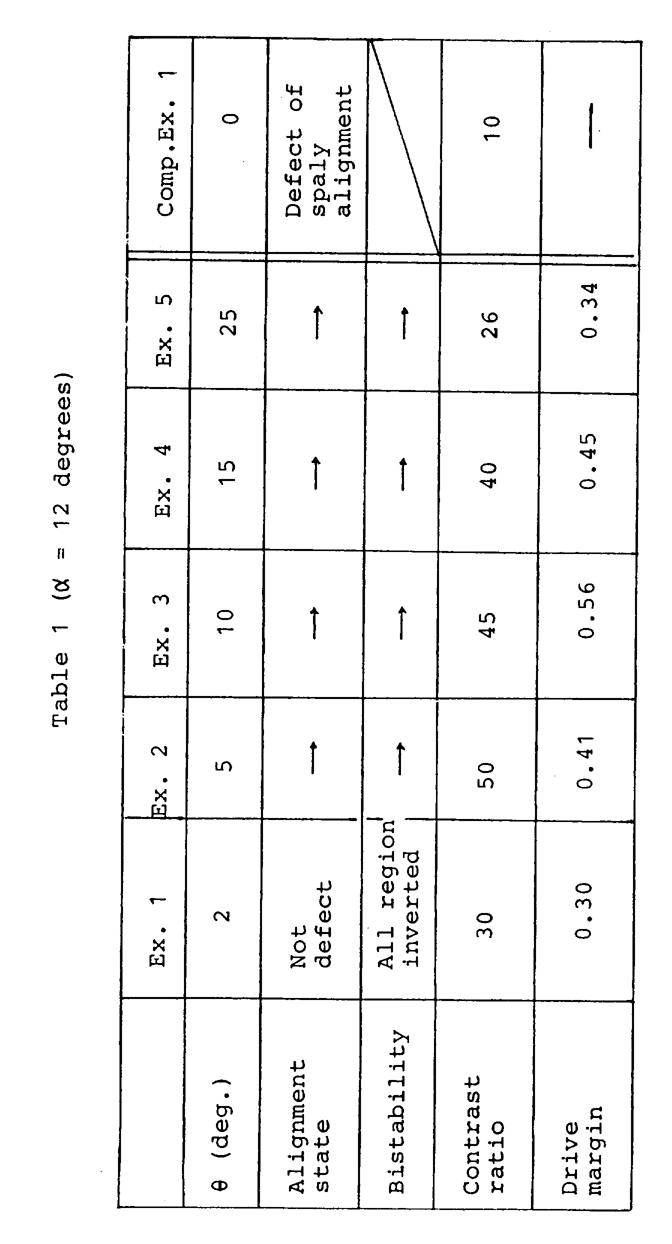

**Table 2**

| (α = 2.5 degrees) | | | | |
|---|---|---|---|---|
| Comparative Example No. | 2 | 3 | 4 | 5 |
| θ (deg.) | 0 | 2 | 10 | 25 |
| Contrast ratio | 8.0 | 8.6 | 8.7 | 8.4 |

**Table 3**

| (α = 4.0 degrees) | | | | |
|---|---|---|---|---|
| Comparative Example No. | 6 | 7 | 8 | 9 |
| θ (deg.) | 0 | 2 | 10 | 25 |
| Contrast ratio | 8.1 | 8.0 | 8.3 | 8.2 |
| Drive margin | 0.21 | 0.20 | 0.19 | 0.20 |

**Table 4**

| (α = 5.0 degrees) | | | | | |
|---|---|---|---|---|---|
| | Comp.Ex.10 | Ex.6 | Ex.7 | Ex.8 | Ex.9 |
| θ (deg.) | 0 | 2 | 10 | 15 | 25 |
| Contrast ratio | 9.5 | 21 | 30 | 28 | 12 |

**Table 5**

| (α = 8.5 degrees) | | | | | |
|---|---|---|---|---|---|
| Ex. No. | 10 | 11 | 12 | 13 | 14 |
| θ (deg.) | 2 | 5 | 10 | 15 | 25 |
| Contrast ratio | 18 | 30 | 28 | 24 | 10 |

**Table 6**

| (α = 10.5 degrees) | | | | | |
|---|---|---|---|---|---|
| Ex. No. | 15 | 16 | 17 | 18 | 19 |
| θ (deg.) | 2 | 5 | 10 | 20 | 25 |
| Contrast ratio | 20 | 36 | 40 | 18 | 10 |

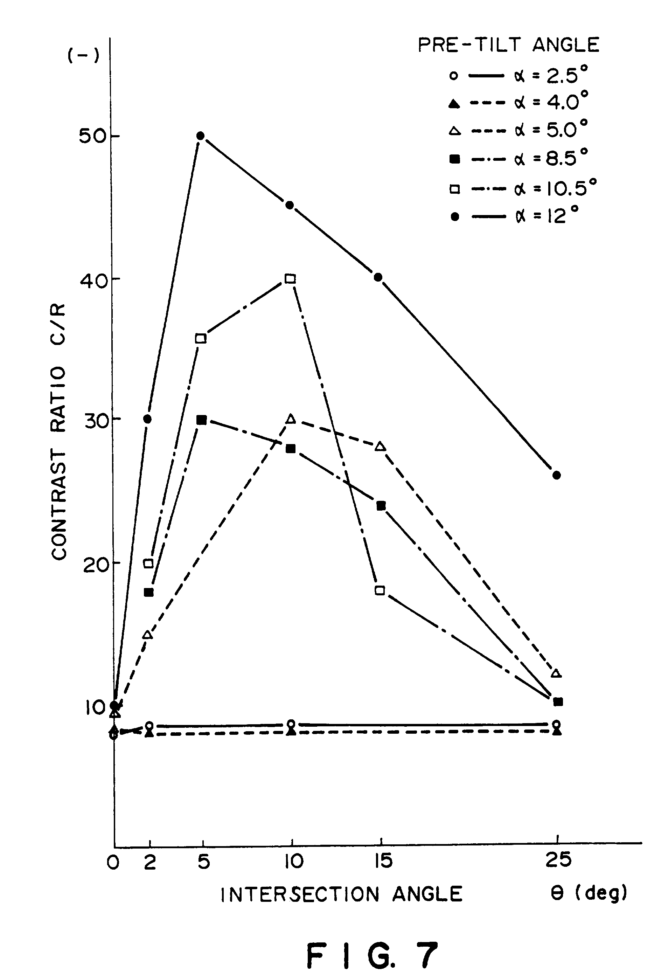

The experimental data shown in Tables 1 - 6 above are summarized in a graph of Figure 7 wherein the contrast ratio data are plotted versus the intersection data for various pre-tilt angles α as parameters. Thus, Figure 7 shows the dependence of the contrast ratio C/R on both the intersection angle θ and the pre-tilt angle α.

As is understood from the graph, there is a remarkable difference in intersection angle θ- dependence of the contrast ratio between the cases of the pre-tilt angle being below 5.0 degrees and the cases of the pre-tilt angle being 5.0 degrees or larger. Further, in the case of the intersection angle θ being 0 degree, the increase in pre-tilt angle α does not provide a substantial improvement in contrast ratio. Thus, in order to improve the contrast ratio, it is important to optimize both parameters, i.e., the pre-tilt angle α and the intersection angle θ between the alignment axes.

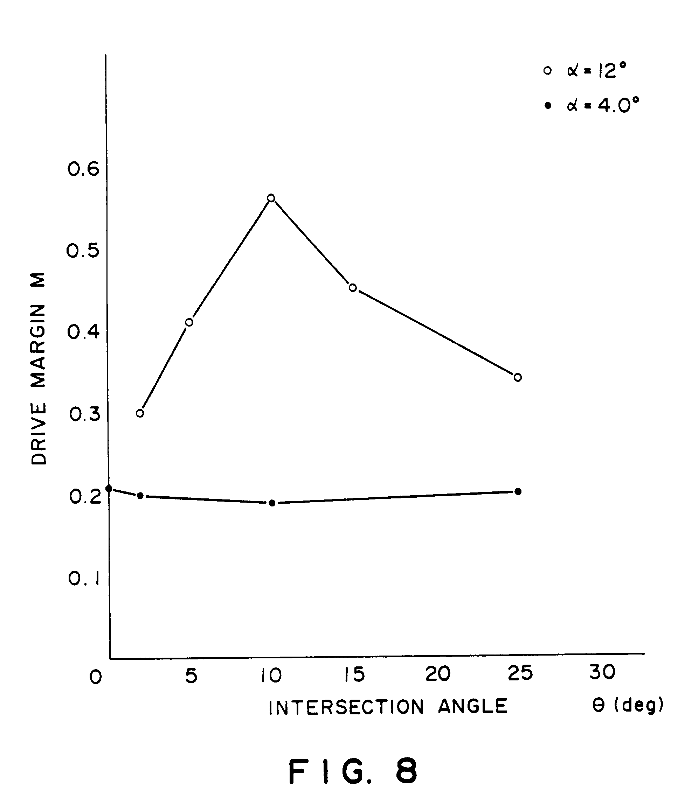

The drive margin data given in Tables 1 and 3 are inclusively shown in Figure 8, from which it will be understood that the tilt angle α and the intersection angle θ within the range of the present invention provided a large drive margin, thus allowing a bright-dark display over wide driving conditions.

Next, the application of the above-mentioned liquid crystal device to an image-forming apparatus will be explained with reference to Figure 11 which shows an electrophotographic image forming apparatus using the above liquid crystal device as a liquid crystal shutter for modulating and controlling a quantity of light to which a photosensitive member is exposed. Figure 12 is an enlarged perspective view showing some vital parts of the apparatus. Referring to Figures 11 and 12, the image-forming apparatus includes: an exposure lamp 1 as a light source, a liquid crystal shutter 2 of the type described above including a pair of polarizers (not specifically shown), a short-focus image forming element array 3, a photosensitive drum 4, a charger 5, a developing device 6, a developing sleeve 7, a transfer sheet guide 8, a transfer charger 9, a cleaning device 10, a cleaning blade 11, and a sheet-conveying guide. Referring to the figures, the photosensitive drum 4 rotating in the direction of an arrow is first charged by a charger 5. Then, the photosensitive drum 4 is illuminated with light which has been modulated depending on image data to form an electrostatic latent image thereon. As is better shown in Figure 12, the light modulation is effected by selectively interrupting or transmitting the light from the exposure lamp 1 through the liquid crystal shutter 2 in which the shutter elements are disposed in an array generally arranged along the axis of the photosensitive drum 4. The shutter elements are disposed in a staggered fashion as shown so as to increase the density of the arrangement. In order to condense the light from the exposure lamp 1 onto the liquid crystal shutter 2, it is possible to dispose a rod lens 15 as shown in Figure 12.

The thus formed electrostatic latent image is developed by attachment of a toner charged on the developing sleeve 7. The toner image formed on the photosensitive drum 4 is transferred onto a transfer sheet 13 supplied from a paper-supply cassette (not shown) under discharge by the transfer charger 9 from the backside of the transfer sheet 13. The toner image on the transfer sheet 13 is then fixed by a fixing device (not shown). On the other hand, a portion of the toner remaining unused on the photosensitive drum 4 is scraped off from the drum surface by the cleaning blade 11 to be recovered in the cleaning device 10. Further, the electric charge remaining on the photosensitive drum 4 is extinguished by illumination with a pre-exposure lamp 14.

As described hereinabove, according to the present invention, there is provided a liquid crystal device comprising a ferroelectric liquid crystal disposed between a pair of substrates each provided with a uniaxial alignment axis, wherein the uniaxial alignment axes are disposed to intersect each other at a prescribed intersection angle and the pre-tilt angle between the liquid crystal molecules and the liquid crystal aligning surfaces is set to 5 - 35 degrees, whereby a good alignment characteristic is attained to provide an increased contrast ratio and also an increased drive margin is provided to allow a bright-dark display under wide driving conditions.

## Claims

1. A ferroelectric liquid crystal device comprising a pair of substrates (101, 101a) and a ferroelectric liquid crystal (103) disposed between said substrates (101, 101a), each substrate having thereon a group of electrodes (102, 102a) for driving said ferroelectric liquid crystal (103) and being provided with an uniaxial alignment axis (401, 402) for aligning the ferroelectric liquid crystal molecules (503), wherein said liquid crystal molecules (503) are aligned to provide a director forming a pre-tilt angle (α) of 5 - 35° with the liquid crystal-aligning surfaces (502) of said substrates (101, 101a), said ferroelectric liquid crystal device being **characterized in that**
each said substrate (101, 101a) has thereon a rubbed organic alignment film (105, 105a) provided with said uniaxial alignment axis (401, 402), and
said alignment axes (401, 402) are set to intersect each other at a prescribed intersection angle (Θ) of 2 - 15°.

2. A ferroelectric liquid crystal device according to claim 1, **characterized in that**
said intersection angle (Θ) is 5 - 15°.

3. A liquid crystal display device including a ferroelectric liquid crystal device according to claim 1 or 2, **characterized by**
drive means (111, 112) for driving said ferroelectric liquid crystal device (100) based on image signals, and
a light source (113).

4. A liquid crystal display apparatus, including a liquid crystal display device according to claim 3, **characterized by**
means (114) for controlling said drive means (111, 112) of said liquid crystal display device (100), and
means (115) for controlling power supply to said liquid crystal display device (100).

5. A recording apparatus including a ferroelectric liquid crystal device according to claim 1 or 2, **characterized by**
means (16) for driving said ferroelectric liquid crystal device (2) based on image signals,
a photosensitive member (4), and
a developing device (6, 7).

## Patentansprüche

1. Ferroelektrische Flüssigkristallvorrichtung, umfassend ein Paar Substrate (101, 101a) und einen ferroelektrischen Flüssigkristall (103), der zwischen den Substraten (101, 101a) angeordnet ist, wobei auf jedem Substrat eine Gruppe Elektroden (102, 102a) zum Betreiben des ferroelektrischen Flüssigkristalls (103) ist und wobei jedes mit einer einachsigen Ausrichtungsachse (401, 402) zum Ausrichten der ferroelektrischen Flüssigkristallmoleküle (503) ausgestattet ist, wobei die Flüssigkristallmoleküle (503) so ausgerichtet werden, daß sie einen Direktor bereitstellen, der einen VorTiltwinkel (α) von 5 bis 35° mit den Flüssigkristall-Ausrichtungsoberflächen (502) der Substrate (101, 101a) bildet, wobei die ferroelektrische Flüssigkristallvorrichtung **dadurch gekennzeichnet ist, daß**
auf jedem Substrat (101, 101a) ein geriebener organischer Ausrichtungsfilm (105, 105a) ist, der mit der einachsigen Ausrichtungsachse (401, 402) ausgestattet ist, und daß die Ausrichtungsachsen (401, 402) so eingestellt sind, daß sie einander bei einem vorgeschriebenen Schnittwinkel (Θ) von 2 bis 15° schneiden.

2. Ferroelektrische Flüssigkristallvorrichtung nach Anspruch 1, **dadurch gekennzeichnet, daß**
der Schnittwinkel (Θ) 5 bis 15° ist.

3. Flüssigkristall-Anzeigevorrichtung mit einer ferroelektrischen Flüssigkristallvorrichtung nach einem der Ansprüche 1 und 2, **gekennzeichnet durch**
Betriebseinrichtungen (111, 112) zum Betreiben der ferroelektrischen Flüssigkristallvorrichtung (100) auf der Grundlage von Bildsignalen und
eine Lichtquelle (113).

4. Flüssigkristall-Anzeigegerät, umfassend eine Flüssigkristall-Anzeigevorrichtung nach Anspruch 3, **gekennzeichnet durch**
Einrichtungen (114) zum Steuern der Betriebseinrichtungen (111, 112) der Flüssigkristall-Anzeigevorrichtung (100), und
Einrichtungen (115) zum Steuern der Energieversorgung der Flüssigkristall-Anzeigevorrichtung (100).

5. Aufzeichnungsgerät mit einer ferroelektrischen Flüssigkristallvorrichtung nach einem der Ansprüche 1 und 2, **gekennzeichnet durch**
Einrichtungen (16) zum Betreiben der ferroelektrischen Flüssigkristallvorrichtung (2) auf der Grundlage von Bildsignalen,
ein lichtempfindliches Element (4), und
eine Entwicklungsvorrichtung (6, 7).

## Revendications

1. Dispositif à cristal liquide ferroélectrique comportant deux substrats (101, 101a) et un cristal liquide ferroélectrique (103) disposé entre lesdits substrats (101, 101a), chaque substrat portant un groupe d'électrodes (102, 102a) pour attaquer ledit cristal liquide ferroélectrique (103) et étant pourvu d'un axe d'alignement uniaxe (401, 402) pour aligner les molécules (503) du cristal liquide ferroélectrique, lesdites molécules (503) du cristal liquide étant alignées pour produire un directeur formant un angle de pré-inclinaison (α) de 5 - 35° avec les surfaces (502) d'alignement du cristal liquide desdits substrats (101, 101a), ledit dispositif à cristal liquide ferroélectrique étant caractérisé en ce que
chaque substrat (101, 101a) porte un film d'alignement organique frotté (105, 105a) pourvu dudit axe d'alignement uniaxe (401, 402), et
lesdits axes d'alignement (401, 402) sont positionnés pour s'intersecter sous un angle imposé (θ) d'intersection de 2-15°.

2. Dispositif à cristal liquide ferroélectrique selon la revendication 1, caractérisé en ce que
ledit angle (θ) d'intersection est de 5 - 15°.

3. Dispositif d'affichage à cristal liquide comprenant un dispositif à cristal liquide ferroélectrique selon la revendication 1 ou 2, caractérisé par
des moyens (111, 112) destinés à attaquer ledit dispositif (100) à cristal liquide ferroélectrique sur la base de signaux d'images, et
une source de lumière (113).

4. Appareil d'affichage à cristaux liquides comprenant un dispositif d'affichage à cristaux liquides selon la revendication 3, caractérisé par
des moyens (114) destinés à commander lesdits moyens d'attaque (111, 112) dudit dispositif (100) d'affichage à cristaux liquides, et
des moyens (115) destinés à commander l'alimentation en énergie dudit dispositif (100) d'affichage à cristaux liquides.

5. Appareil d'enregistrement comprenant un dispositif à cristal liquide ferroélectrique selon la revendication 1 ou 2, caractérisé par
des moyens (16) destinés à attaquer ledit dispositif (2) à cristal liquide ferroélectrique sur la base de signaux d'images,
un élément photosensible (4), et
un dispositif de développement (6, 7).
